# EUROPÄISCHE PATENTANMELDUNG

(11) **EP 1 075 787 A1**
(43) Veröffentlichungstag der Anmeldung: **14.02.2001**
(21) Anmeldenummer: 00116561.2
(22) Anmeldetag: 01.08.2000
(51) Int. Cl.: A01D 43/063, A01D 75/30

(54) **Halteeinrichtung und Fahrzeug bzw. Gerät**

(30) Priorität: 13.08.1999 US 374578
(71) Anmelder: DEERE & COMPANY, Moline, Illinois 61265-8098 (US)
(72) Erfinder: Leden, Nathan M., Cary, NC 27511 (US)
(74) Vertreter: Magin, Ludwig Bernhard

(57) **Zusammenfassung**

Es ist bekannt Spindelmäher mit Sammeleinrichtungen oder Sammelbehältern zu versehen, die an eine Mäheinheit angrenzend angeordnet sind, um geschnittenes Gras bzw. Pflanzen aufzunehmen. Wenn der Sammelbehälter gefüllt ist, wird er durch eine Bedienungsperson von der Mäheinheit abgenommen und entleert.

Es wird eine Halteeinrichtung mit wenigstens einem mit einem Fahrzeug (10) verbindbaren Tragarm (14) zur beweglichen Aufnahme einer Mäheinheit (24) und mit Mitteln (60) zur Übertragung zumindest eines wesentlichen Teils des Gewichts eines Sammelbehälters (34) an den Tragarm (14) vorgeschlagen, die wenigstens ein mit dem Tragarm (14) beweglich verbindbares Stützelement (56) zur Bestimmung der Lage des Sammelbehälters (34) aufweist. Darüber hinaus wird ein Fahrzeug (10) bzw. ein Gerät mit einer solchen Halteeinrichtung vorgeschlagen.

Halteeinrichtungen und Fahrzeuge bzw. Geräte werden in der Rasen-, Garten- und Grundstückspflege eingesetzt.

## Beschreibung

Die Erfindung betrifft eine Halteeinrichtung mit wenigstens einem mit einem Fahrzeug verbindbaren Tragarm zur beweglichen Aufnahme einer Mäheinheit und mit Mitteln zur Übertragung zumindest eines wesentlichen Teils des Gewichts eines Sammelbehälters an den Tragarm sowie ein Fahrzeug bzw. Gerät.

Es ist bekannt, Spindelmäher mit Sammeleinrichtungen oder Behältern zu versehen, die an eine Mäheinheit angrenzend angeordnet sind, um geschnittenes Gras bzw. Pflanzen aufzunehmen. Wenn der Behälter gefüllt ist, wird er durch eine Bedienungsperson von der Mäheinheit abgenommen und entleert.

Die US-A-5,533,326 zeigt eine Spindelmäheinheit mit einer Grassammeleinrichtung in der Art eines Behälters, wobei der Behälter an seinen vertikalen Seiten jeweils eine Nut bzw. eine Einkerbung aufweist. An einer Trageinheit, an der die Mäheinheit angebracht ist, sind Bolzen vorgesehen, die durch jeweils eine der Einkerbungen zum Anbringen des Behälters aufgenommen werden können. Zum Abnehmen wird der Behälter angehoben, bis sich die Bolzen nicht mehr in den Einkerbungen bzw. Nuten befinden.

Die der Erfindung zugrunde liegende Aufgabe wird darin gesehen, die Wirkungsweise bekannter Halteeinrichtungen für Sammelbehälter sowie von Fahrzeugen bzw. Geräten mit solchen Halteeinrichtungen zu verbessern.

Diese Aufgabe wird erfindungsgemäß durch die Lehre der Patentansprüche 1 bzw. 11 gelöst, wobei in den weiteren Patentansprüchen die Lösung in vorteilhafter Weise weiterentwickelnde Merkmale aufgeführt sind.

Auf diese Weise wird das Gewicht des Sammelbehälters über die Mittel an den Tragarm übertragen, ohne daß die Mäheinrichtung beeinflußt, beispielsweise verschwenkt, oder belastet wird. So wird einer negativen bzw. ungewollten Beeinflussung der Schnitthöhe sowie der Schnittqualität entgegengewirkt.

Gleichzeitig wird der Sammelbehälter durch das Stützelement beweglich aufgenommen und kann durch dieses beispielsweise in dichter Anlage an der Mäheinheit gehalten werden, um eine gute Schnittgutübergabe zu gewährleisten. Durch die Trennung der Aufnahme eines wesentlichen Teils des Gewichts des Sammelbehälters von der beweglichen Lagerung wird die letztere nicht oder nur geringfügig durch das Gewicht belastet, wodurch eine freie Beweglichkeit gewährleistet wird.

Es ist denkbar, daß die Mäheinrichtung und das Stützelement als völlig eigenständige Bauteile vorgesehen sind. Eine besonders einfache Realisierung einer guten Gutübergabe ergibt sich aber, wenn die Mäheinheit und das Stützelement zumindest im wesentlichen fest verbunden sind, so daß ein vorgegebener Abstand bzw. eine möglichst dichte Anlage des Sammelbehälters an der Mäheinheit ermöglicht bzw. dauerhaft sichergestellt wird.

Die Mäheinheit und das Stützelement können separat an dem Tragarm angeschlossen sein. Besonders günstig ist es aber, insbesondere dann, wenn die Mäheinheit und das Stützelement, wie vorstehend beschrieben, zumindest im wesentlichen fest verbunden sind, daß sie an dem Tragarm gemeinsam beispielsweise über eine Verbindungseinrichtung in der Art eines oder mehrerer Halter, Zwischenstücke, eines Jochs etc. angeschlossen sind.

Vorzugsweise sind die Mäheinheit und das Stützelement beweglich bzw. gelenkig über die Verbindungseinrichtung an dem Tragarm angebracht. Weist die Verbindungseinrichtung ein Universal- bzw. Kugelgelenk auf bzw. ist sie über ein solches an dem Tragarm angebracht, so wird eine gute Beweglichkeit gewährleistet, wodurch ermöglicht wird, daß sowohl die Mäheinheit als auch das Stützelement und damit der Sammelbehälter der Kontur des Untergrundes folgen kann, um eine gute Schnittqualität und eine gleichmäßige Schnitthöhe zu gewährleisten sowie einem Einschneiden der Mäheinheit in den Untergrund bzw. einer Beschädigung durch einen Kontakt mit dem Untergrund entgegenzuwirken. Es sind aber auch Gelenkverbindungen denkbar, die nur eine Schwenkbewegung um eine Achse erlauben, sowie solche, die eine Kombination mehrerer Gelenke darstellen.

Der Sammelbehälter kann an dem Tragarm in üblicher Weise lösbar vorgesehen sein, beispielsweise indem er an diesem angeschraubt, verstiftet, mittels Haken aufgesetzt, verklemmt o.ä. wird. Es kann aber in einfacher Weise vorgesehen werden, daß das Stützelement einen zumindest im wesentlichen nach oben gerichteten Bereich aufweist, bei dem es sich vorzugsweise um einen Endbereich des Stützelements handelt und der mit einer Aufnahmeeinrichtung an dem Sammelbehälter zusammenwirken kann. Die Aufnahmeeinrichtung kann dabei vorzugsweise derart ausgeführt sein, daß der nach oben gerichtete Bereich durch sie aufgenommen wird und der Sammelbehälter durch sein Eigengewicht bzw. das Gewicht des angesammelten Mähguts an dem Stützelement gesichert wird. Es ist aber auch die Verwendung zusätzlicher Sicherungsmittel, beispielsweise in der Art von Sicherungsstiften, Riegeln etc., möglich.

Die Aufnahmeeinrichtung kann als eine Ausnehmung ausgeführt sein, die beispielsweise durch eine an dem Sammelbehälter angebrachte oder in ihn eingeformte Öse gebildet werden kann, so daß die Öse auf das Stützelement aufgesetzt und der Sammelbehälter so an ihm gehalten werden kann. Besonders günstig ist es aber, eine Ausnehmung an oder in dem Sammelbehälter vorzusehen, die sich zumindest im wesentlichen in vertikaler Richtung erstreckt, so daß die Ausnehmung bzw. der Sammelbehälter auf das Stützelement aufgesetzt werden und an diesem entlang in eine Endlage gleiten kann, so daß ein geführtes und dadurch komfortables Aufsetzen erfolgt, ohne daß eine Bedienungsperson zusätzliche Aufmerksamkeit aufbringen muß. Die Endlage des Sammelbehälters auf dem Aufnahmearm kann durch einen an dem Stützelement oder an dem Sammelbehälter vorgesehenen Anschlag bestimmt werden. In einfacher Weise kann dies dadurch realisiert werden, daß an der Außenseite bzw. insbesondere an wenigstens einer Seitenfläche des Sammelbehälters eine Nut, Kerbe oder Rinne vorgesehen oder auch eingebracht ist, die der Ausnehmung entspricht. Ist diese Nut etc. einseitig begrenzt, so kann auch der Endlagenanschlag durch sie zur Verfügung gestellt werden.

Die Mittel zur Übertragung des Gewichts können dieses direkt an das Fahrzeug weitergeben. Um ein einfaches An- und Abbauen der Halteeinrichtung sowie eine kompakte Ausführungsform zu gewährleisten, können die Mittel auch einenends an dem Tragarm angebracht sein, so daß sie das Gewicht des Sammelbehälters und die dadurch erzielten Kräfte in den Tragarm einleiten. Vorzugsweise sind sie aber direkt oder indirekt mit der Verbindungseinrichtung verbunden, so daß sie bei einer gelenkigen Lagerung der Mäheinheit und des Stützelements über die Verbindungseinrichtung den Bewegungen derselben folgen können. Andernends können die Mittel direkt oder indirekt an dem Sammelbehälter angreifen. Vorzugsweise greifen sie aber direkt oder indirekt an dem Stützelement an, so daß sie von dem Sammelbehälter zum Abnehmen desselben nicht gelöst bzw. entfernt werden müssen.

Die Verbindung der Mittel mit der Verbindungseinrichtung kann direkt oder über ein zweites Stützelement erfolgen, das mit dem Tragarm vorzugsweise zumindest im wesentlichen steif verbunden ist. Auf diese Weise kann eine günstige Lage der Krafteinleitung bzw. -übertragung an den Tragarm vorgesehen werden, vorzugsweise derart, daß diese in der Nähe der Verbindungseinrichtung bzw. des Kugelgelenks oder auch auf oder in der Nähe einer Bewegungsachse der gelenkigen Verbindung der Verbindungseinrichtung mit dem Tragarm erfolgt.

Die Mittel können als steife oder zumindest im wesentlichen steife Elemente beispielsweise in der Art von Streben oder Stangen vorgesehen sein. Sind sie aber zumindest im wesentlichen oder auch zumindest bereichsweise flexibel vorgesehen, so stehen sie einer Bewegung des Sammelbehälters bzw. des Stützelements und der eventuell mit diesem fest verbundenen Mäheinheit nicht entgegen. Eine bewegliche Lagerung der Mittel ist günstig, muß aber nicht zwingend erforderlich sein.

Die flexiblen oder zumindest bereichsweise flexiblen Mittel können in einfacher Art und Weise in der Art von Ketten, Seilen oder auch Drähten bzw. zumindest bereichsweise als derartige Elemente vorgesehen sein. Bei einer Verwendung eines bandartigen Elements und insbesondere eines Drahtes kann dessen Länge variiert werden, um die Stellung des Sammelbehälters bzw. des Tragarms zu beeinflussen. Dies kann bei einer Kette beispielsweise dadurch erfolgen, daß einzelne Kettenglieder entfernt oder der Anschluß mittels unterschiedlicher Kettenglieder erfolgen kann. Vorteilhaft ist aber die Verwendung einer Justierschraube, so daß eine Einstellung in einfacher Weise ausgeführt werden kann, ohne daß ein vollständiges Entfernen der Mittel erforderlich ist.

Eine erfindungsgemäße Halteeinrichtung wird vorzugsweise an einem Fahrzeug bzw. einem Gerät zur Rasen-, Garten- bzw. Grundstückspflege eingesetzt. Es kann sich hierbei um selbstfahrende, handgeführte oder auch um handgeschobenen Fahrzeuge bzw. Geräte und insbesondere um Mähgeräte wie Spindelmäher handeln. Es ist aber auch der Einsatz an anderen Fahrzeugen und Geräten denkbar, an denen Aufsammelbehälter angrenzend an eine Arbeitseinrichtung verwendet werden, wie dies beispielsweise an Kehrmaschinen und Laubsammelgeräten der Fall ist.

In der Zeichnung ist ein nachfolgend näher beschriebenes Ausführungsbeispiel der Erfindung dargestellt. Es zeigt:
- Fig. 1: eine Seitenansicht eines mehrere Mäheinheiten aufweisenden Fahrzeugs,
- Fig. 2: eine Ansicht einer an dem Fahrzeug vorn anbringbaren Mäheinheit mit einer Halteeinrichtung und einem Sammelbehälter,
- Fig. 3: eine Darstellung entsprechend Fig. 3 bei abgenommenem Sammelbehälter und
- Fig. 4: eine vergrößerte Teilansicht der Halteeinrichtung.

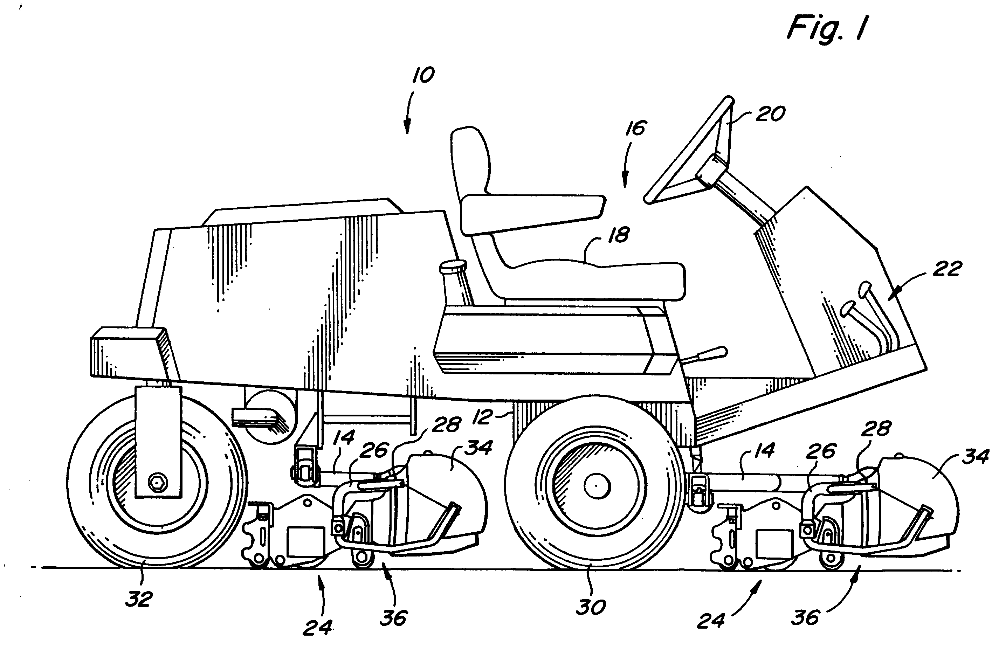

Es wird auf Figur 1 Bezug genommen, in der ein Fahrzeug 10 entsprechend der bevorzugten Ausführungsform der vorliegenden Erfindung gezeigt wird. Das Fahrzeug 10 weist einen Rahmen 12 auf, an dem Anbaugerätetragarme bzw. Tragarme 14 vorgesehen sind. Eine Bedienerplattform 16, welche einen Sitz 18, ein Lenkrad 20 und Steuerpedale 22 aufweist, ist wirksam auf dem Fahrzeug 10 angeordnet und Bezugnahmen in der folgenden Beschreibung auf links und rechts, nehmen Bezug auf die linke und rechte Seite einer Bedienungsperson, wenn sie auf dem Fahrzeug 10 Platz genommen hat. Jeder Tragarm 14 trägt eine Spindelmähereinheit oder Mäheinheit 24 an einem Joch oder einer Verbindungseinrichtung 26, welche an dem Tragarm 14 an einem Kugel- bzw. Universalgelenk 28 vorgesehen ist. Ein Satz von Mäheinheiten 24 wird dem Fahrzeug 10 vorausgezogen (wobei die rechte Mäheinheit in Figur 1 sichtbar ist) und wenigstens eine Mäheinheit 24 ist unterhalb des Fahrzeugs 10 zwischen einem vorderen Satz von Rädern 30 und einem rückwärtigen Nachlaufrad 32 angeordnet. Jede Mäheinheit 24 ist mit einem Pflanzenabschnittssammelcontainer in Form eines Sammelbehälters 34 versehen, welcher vor der Mäheinheit 24 angeordnet ist und durch einen Behälterträger 36 getragen wird.

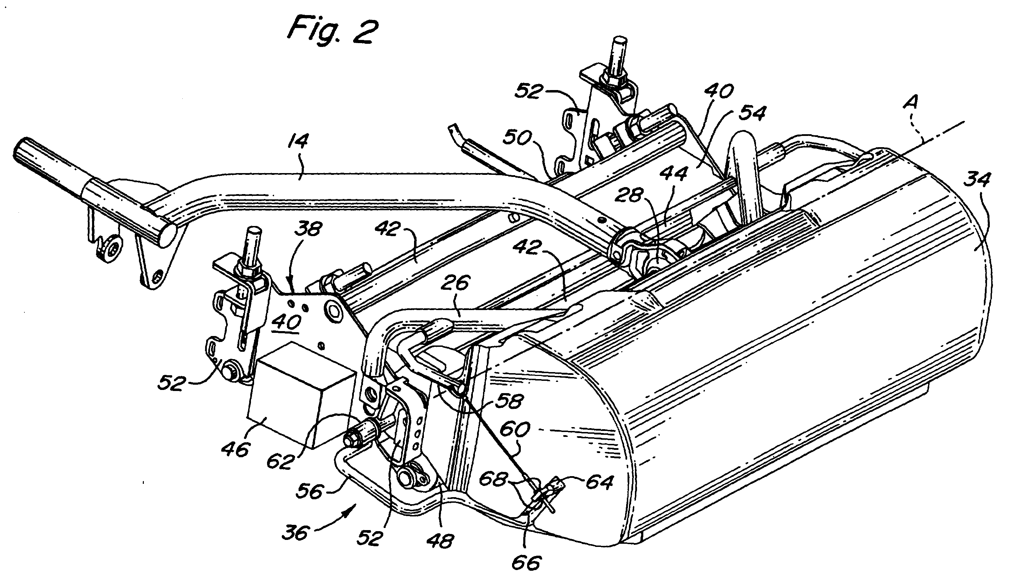

Es wird nun auf Figur 2 Bezug genommen, in der die linksseitige Mäheinheit 24, welche vor dem Fahrzeug 10 gezogen wird, gezeigt wird. Die Mäheinheit 24 weist einen Rahmen 38 mit Seitenrahmen 40 und sich seitlich erstreckenden Stützen 42 auf. Der Rahmen 38, welcher eine Mähspindel 44 trägt, die durch einen Motor 46 angetrieben wird, um um eine sich im wesentlichen horizontale und sich nach seitlich erstreckende Achse zu rotieren. Vordere und rückwärtige Rollen 48 und 50 sind mit den Seitenrahmen 40 über Anbaukonsolen 52 verbunden. Die Rollen 48 und 50 berühren den Untergrund während eines Betriebes und können nach oben oder unten verstellt werden, um die Schneidhöhe der Mäheinheit 24 zu verändern. Während eines Betriebs der Mäheinheit 24, wird Gras zwischen den rotierenden Spindelmessern (nicht gezeigt) der Mähspindel 44 und einem Gegenmesser (nicht gezeigt), das zwischen den Seitenrahmen 40 in bekannter Art und Weise angebracht ist, geschnitten.

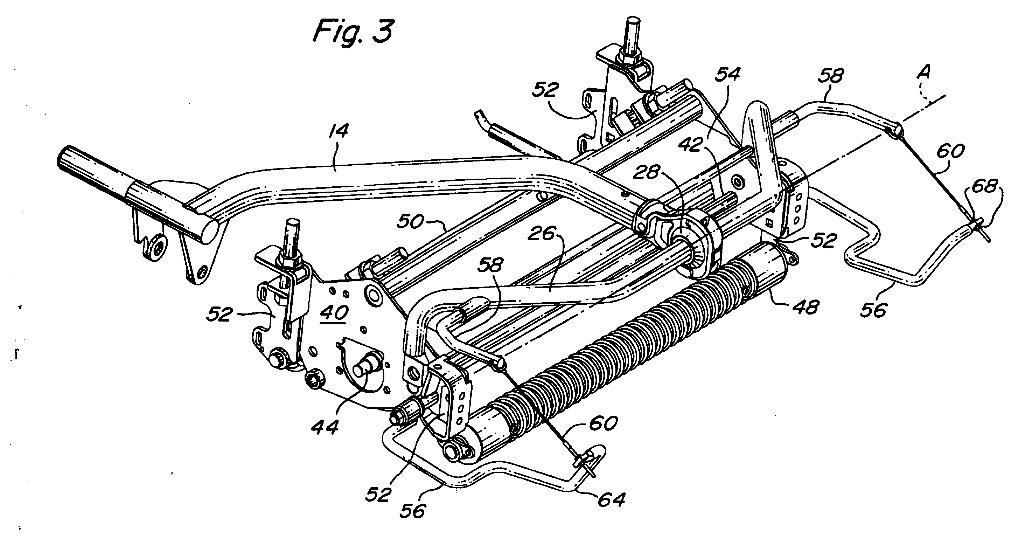

Das Grasabschnittauffangsystem der bevorzugten Ausführungsform weist einen Kunststoffcontainer oder Sammelbehälter 34 auf, welcher direkt vor und angrenzend an die Mäheinheit 24 angeordnet ist, um Abschnitte, die durch die Mähspindel 44 geschnitten wurden, aufzunehmen. Die Rotation der Mähspindel 44 treibt die Abschnitte gegen eine Platte 54, die die Abschnitte nach vorwärts in den Sammelbehälter 34 ablenkt. Der Behälterträger 36 ist vorgesehen, um den Sammelbehälter 34 mit der Mäheinheit 24 lösbar zu verbinden. Endbereiche eines sich nach seitlich erstreckenden Bauteils, Jochs bzw. einer Verbindungseinrichtung 26 sind mit entsprechenden Seitenrahmen 40 der Mäheinheit 24 zwischen den Anbaukonsolen 52 verschraubt oder anderweitig befestigt, wie es am besten aus Figur 3 ersehen werden kann. Die Verbindungseinrichtung 26 wiederum ist an einem Ende des Tragarms 14 an dem Universalgelenk 28 angebracht. Die Mäheinheit 24 kann daher durch den Tragarm 14 in eine Transportstellung angehoben und in eine Schneidposition abgesenkt werden, während sie ihre Fähigkeit, der Kontur des Untergrunds zu folgen und Pflanzen in einer durch eine Einstellung der Rollen 48, 50 vorgegebenen Höhe zu schneiden, beibehält.

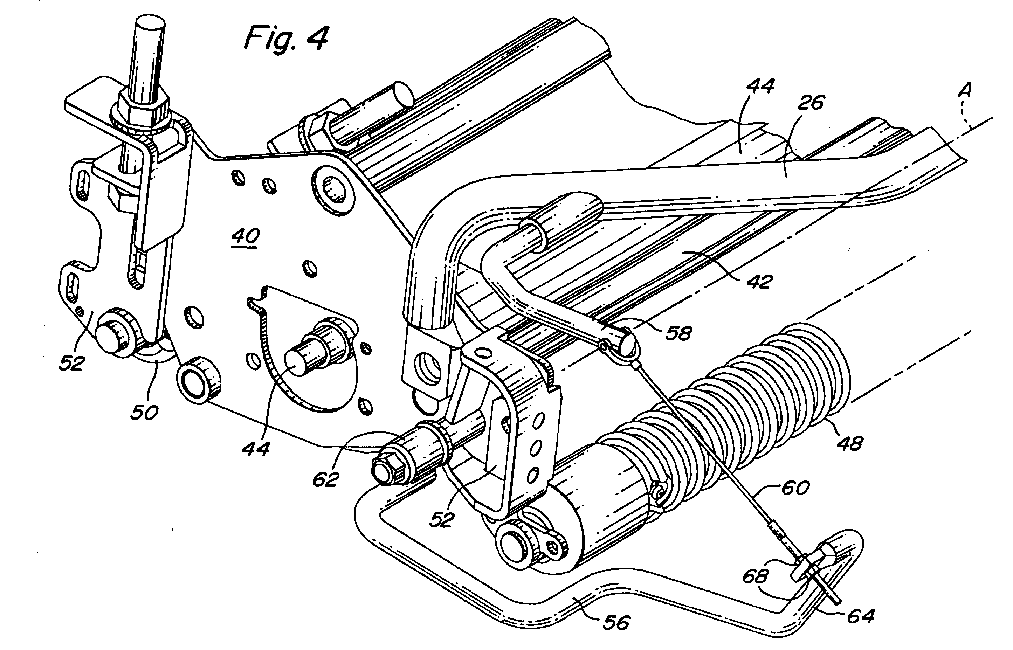

Die Figuren 2 - 4 zeigen den Behälterträger 36, welcher ein unteres Stützelement 56, ein oberes Stützelement 58 und ein Kabel oder Mittel 60 auf jeder Seite der Schneideinheit 24 aufweist, welche mit der Verbindungseinrichtung 26 und dem Tragarm 14 zusammenwirken, um den Sammelbehälter 34 in einer gewünschten Stellung zu halten. Die Bauteile an der inneren Seite der Mäheinheit 24, die in den Figuren 2 - 4 gezeigt werden, sollen besprochen werden (ihre äußeren Gegenstücke sind spiegelbildlich ausgeführt). Ein röhrenförmiger Endbereich 62 des unteren Stützelements 56 ist mit dem Seitenrahmen 40 verschraubt und ein nach oben gewandter Bereich 64 des unteren Stützelements 56 ist daran angepaßt, in einem ergänzenden Schlitz bzw. einer Aussparung 66 aufgenommen zu werden, der in dem Sammelbehälter 34 vorgesehen ist, so daß das untere Stützelement 56 als eine schwenkbare Halterung dient, um den Sammelbehälter 34 mit Bezug auf die Mäheinheit 24 in einer gewünschten Stellung zu halten. Das obere Stützelement 58 ist mit der Verbindungseinrichtung 26 fest (beispielsweise durch ein Verschweißen) verbunden und ein Endbereich des Stützelements 58 erstreckt sich über eine Achse A des Universalgelenks 28. Die Mittel 60 sind an einem Ende schwenkbar mit dem Endbereich des oberen Endbereichs des Stützelements 58 und mit einem gegenüberliegenden, mit einem Gewinde versehenen Ende mit dem unteren Stützelement 56 an einer Erweiterung dessen nach oben gewandten Bereichs 64 angebracht. Die effektive Länge der Mittel 60 ist verstellbar, indem Justiermuttern 68 an dem ein Gewinde aufweisenden Ende des Kabels 60 vorgesehen sind.

Da das Gewicht des Behälters 34 und seines Inhalts zu dem Tragarm 14 entlang der Achse des Kugelgelenks 28 (Fig. 2 - 3) übertragen wird, werden Momente, die dazu neigen die Mäheinheit 24 zu kippen (und dadurch die effektive Schnitthöhe zu verändern), effektiv eliminiert, während zur gleichen Zeit, das untere Stützelement 56 und das Universalgelenk 28 dem Sammelbehälter 34 erlauben, eine eng an die Mäheinheit 24 angrenzende Beziehung aufrechtzuerhalten, so daß Abschnitte effektiv und verläßlich gesammelt werden, selbst wenn das Fahrzeug 10 gelenkt wird. Die Mittel 60 sind vorzugsweise flexibel, so daß der Sammelbehälter 34 der Kontur des Untergrundes folgen kann.

Um die hier beschriebenen Vorteile zu erzielen, kann das obere Stützelement 58 an der Verbindungseinrichtung 26 an jedem Punkt angebracht werden, solange die Enden des oberen Stützelements 58 (in das Kraft von dem unteren Stützelement 56 durch das Kabel bzw. die Mittel 60 eingeleitet wird) im wesentlichen auf der Achse A des Universalgelenks 28 liegen. Die resultierende Kraft wird dann durch die Achse A des Kugelgelenks 28 zu dem Tragarm 28 geleitet. In der in den Figuren 1 - 4 gezeigten bevorzugten Ausführungsform, werden mehr als 2/3 des Gewichts des Sammelbehälters 34 durch den Tragarm 14 anstatt durch die Mäheinheit 24 aufgenommen. Daher werden die resultierenden Kräfte und Momente nicht durch die Verbindungseinrichtung 26 oder die Mäheinheit 24 zu einem Grad getragen, der die Schneidhöhe oder die Schnittqualität in wesentlicher Weise beeinflussen würde. Der Behälterträger 36 der bevorzugten Ausführungsform stellt ein klares Design zur Verfügung, welches nicht in den Frontbereich des Sammelbehälters 34 hineinragt und die Möglichkeit stark reduziert, daß eine Bedienungsperson den Behälterträger 36 versehentlich beschädigt, indem während des Betriebs ein Gegenstand berührt wird.

Als nächstes soll der Betrieb der Mäheinheiten 16 beschrieben werden. Während des Mähbetriebs sammeln sich Grasabschnitte in dem Sammelbehälter 34. Wenn ein Sammelbehälter 34 an dem vorderen Bereich des Fahrzeugs 10 gefüllt ist, kann die Bedienungsperson zu dem vorderen Bereich des Fahrzeugs 10 gehen und muß nach unten greifen, um den Behälter 34 zu entfernen. Um den Behälter 34 zu entfernen, hebt sie den Behälter 34 nur an, so daß der nach oben gewandte Bereich 64 des unteren Stützelements 56 nicht länger in die entsprechenden Aussparungen 66 in dem Behälter 34 eingreift. Die bevorzugte Ausführungsform erlaubt so der Bedienungsperson, den gefüllten Sammelbehälter 34 in einer einzigen Bewegung abzunehmen.

Wenn der Behälter 36 geleert wurde, muß die Bedienungsperson den Sammelbehälter 34 wieder an der Mäheinheit 24 anbringen, bevor der Mähbetrieb fortgesetzt werden kann. Um dies zu tun, kann sie einfach den Sammelbehälter 34 nach unten gleiten lassen, so daß die nach oben gewandten Bereiche 64 des unteren Stützelements 56 wiederum in die entsprechenden Aussparungen 66 in dem Behälter 34 eingreifen. Wenn die oberen Enden, der nach oben gewandten Bereiche 64 an dem oberen Ende der Aussparungen 66 anliegen, sind die Sammelbehälter 34 wieder richtig für einen Mähbetrieb positioniert.

Für den Fall, daß eine Mäheinheit 24 unterhalb des Fahrzeugs 10 und zwischen den Rädern 30, 32 angeordnet ist, erlaubt es die bevorzugte Ausführungsform der Bedienungsperson auch, an der Seite des Fahrzeugs 10 zu stehen, um den Sammelbehälter 34 zur Entleerung zu entfernen und um den Sammelbehälter 34 wieder anzubringen.

Da die gleichen Teile für beide, das vorn angebrachte und das in der Mitte angebrachte Sammelsystem verwendet werden, wird die Anzahl der Bauteile reduziert und die Herstellungskosten werden entsprechend reduziert.

Obwohl die Erfindung mit Bezug auf die dargestellte Ausführungsform beschrieben wird, versteht der Fachmann, daß die Erfindung in der beschriebenen oder in modifizierter Form zur Verwendung in anderen Anwendungsfällen vorteilhaft sein kann. Beispielsweise kann der oben beschriebene Behälterhalter 36 an Mäheinheiten verwendet werden, die so angeordnet sind, daß der Sammelbehälter der Mäheinheit während eines Mähbetriebs nachfolgt. Die vorliegende Erfindung soll nicht durch die oben beschriebenen Ausführungsformen, sondern nur durch die folgenden Ansprüche begrenzt werden.

## Patentansprüche

1. Halteeinrichtung mit wenigstens einem mit einem Fahrzeug (10) verbindbaren Tragarm (14) zur beweglichen Aufnahme einer Mäheinheit (24) und mit Mitteln (60) zur Übertragung zumindest eines wesentlichen Teils des Gewichts eines Sammelbehälters (34) an den Tragarm (14), gekennzeichnet durch wenigstens ein mit dem Tragarm (14) beweglich verbindbares Stützelement (56) zur Bestimmung der Lage des Sammelbehälters (34).

2. Halteeinrichtung nach Anspruch 1, dadurch gekennzeichnet, daß die Mäheinheit (24) und das Stützelement (56) zumindest im wesentlichen fest verbunden sind.

3. Halteeinrichtung nach einem oder mehreren der vorherigen Ansprüche, dadurch gekennzeichnet, daß die Mäheinheit (24) und das Stützelement (56) über eine vorzugsweise gemeinsame Verbindungseinrichtung (26) an dem Tragarm (14) angebracht sind.

4. Halteeinrichtung nach Anspruch 3, dadurch gekennzeichnet, daß die Verbindungseinrichtung (26) gelenkig vorzugsweise über ein Universalgelenk (28) an dem Tragarm (14) angebracht ist.

5. Halteeinrichtung nach einem oder mehreren der vorherigen Ansprüche, dadurch gekennzeichnet, daß das Stützelement (56) einen zumindest im wesentlichen nach oben gerichteten Bereich (64) aufweist, der mit einer Aufnahmeeinrichtung an dem Sammelbehälter (34) zusammenwirken kann.

6. Halteeinrichtung nach Anspruch 5, dadurch gekennzeichnet, daß die Aufnahmeeinrichtung durch eine vorzugsweise zumindest im wesentlichen vertikal ausgerichtete Ausnehmung (66) in dem Sammelbehälter (34) gebildet wird.

7. Halteeinrichtung nach einem oder mehreren der vorherigen Ansprüche, dadurch gekennzeichnet, daß die Mittel (60) einenends direkt oder indirekt an dem Tragarm (14) oder der Verbindungseinrichtung (26) und andernends direkt oder indirekt an dem Stützelement (56) und/oder dem Sammelbehälter (34) angreifen.

8. Halteeinrichtung nach Anspruch 7, dadurch gekennzeichnet, daß die Mittel (60) vorzugsweise in der Nähe des Anschlußpunktes der Verbindungseinrichtung (26) bzw. auf einer Bewegungsachse (A) der gelenkigen Verbindung der Verbindungseinrichtung (26) und des Tragarms (14) an der Verbindungseinrichtung (26) bzw. einem zweiten mit der Verbindungseinrichtung (26) vorzugsweise zumindest im wesentlichen steif verbundenen Stützelement (58) angreifen.

9. Halteeinrichtung nach einem oder mehreren der vorherigen Ansprüche, dadurch gekennzeichnet, daß die Mittel (60) zumindest im wesentlichen flexibel ausgebildet sind.

10. Halteeinrichtung nach Anspruch 9, dadurch gekennzeichnet, daß die Mittel (60) als ein bandartiges Element ausgeführt sind.

11. Fahrzeug (10) bzw. Gerät, vorzugsweise zur Rasen-, Garten bzw. Grundstückspflege mit einer Halteeinrichtung nach einem oder mehreren der vorherigen Ansprüche.
